# EUROPEAN PATENT APPLICATION

(11) **EP 4 568 075 A1**
(43) Date of publication of application: **11.06.2025**
(21) Application number: 23214206.7
(22) Date of filing: 05.12.2023
(51) Int. Cl.: H02K 5/173, H02K 21/24

(54) **CONNECTION STRUCTURE FOR A YOKELESS AND SEGMENTED ARMATURE AXIAL FLUX MACHINE**

(71) Applicant: Schaeffler Technologies AG & Co. KG, 91074 Herzogenaurach (DE)
(72) Inventor: Mechi, Marco, 80687 München (DE); Marc, Daniel, 80687 München (DE); Carli, Daniele, 80687 München (DE); Matteini, Davide, 80687 München (DE); Manzo, Gianluigi, 80687 München (DE); Barsanti, Tommaso, 80687 München (DE)
(74) Representative: Vitesco Technologies

(57) **Abstract**

The present invention relates to a yokeless and segmented armature axial flux electric machine (10), having a shaft (12), at least one bearing assembly (18a, 18b) mounted to the shaft (12), a stator (38), and at least one rotor (40a,40b) mounted to the shaft (12) such that the rotor (40a,40b) is adjacent the stator (38) and the bearing assembly (18a, 18b), and there is a gap (60a,60b) between the at least one rotor (40a,40b) and the stator (38). In an embodiment, the yokeless and segmented armature type axial flux electric machine (10) includes a connection structure connecting the stator (38) and the rotor (40a,40b) to the shaft (12). In an embodiment, the connection structure includes an inner ring (26) being part of the stator (38), the inner ring (26) is connected to the at least one bearing assembly (18a, 18b), and a bearing nut (34) connected to the inner ring (26) such that the at least one bearing assembly (18a, 18b) is adjacent a portion of the bearing nut (34). The rotor (40a,40b) and the shaft (12) rotate relative to the stator (38).

## Description

The invention relates generally to a connection structure for a yokeless and segmented armature axial flux machine, where the connection structure facilitates connection between a stator and a bearing assembly, and connection between two rotors and a shaft, such that there is a desired gap between the first rotor and the stator, and another desired gap between the second rotor and the stator.

Many different types of electrical machines (both motors and generators) are generally known and are used for many different applications. Electrical machines, such as brushless DC (BLDC), synchronous or asynchronous AC, switched reluctance (SRM), axial flux (AF), have various advantages and disadvantages with regard to geometry, driving circuit (requiring a digital signal processor (DSP) or a simple microcontroller), required sensors (current sensor, position sensor), and operating characteristics (cogging, torque ripple), etc.

Axial flux machines typically have two different variants (depending on the orientation of the magnets on the two rotor discs): the torus type (which has a stator yoke), and the yokeless and segmented armature type (which has no stator yoke). Axial flux machines typically have higher power and torque density compared to radial flux machines. Yokeless and segmented armature axial flux machines also have higher efficiency compared to radial flux machines because of the absence of the stator yoke and its associated losses.

However, yokeless and segmented armature type axial flux machines present some technical challenges. Compactness of a yokeless and segmented armature type axial flux machine requires accurate part position and rigidness for control of the dimension of the air gap (i.e., distance between rotor and stator). This is more challenging for a rotor-stator-rotor (RSR) arrangement having two air gaps, and the rotors must be mutually angularly phased to get the optimum machine performance.

The mechanical positioning and stability of each rotor during assembly is challenging, as each axial gap must be as small as possible to limit the magnetic reluctance. The rotor is immersed in a strong magnetic field generated by magnets and is also exposed to a high centrifugal force due to the high rotational speed of the rotor. The air gap of axial flux machines is not defined by construction (as in radial machines) but must be achieved by assembly. For this reason, the precision and part to part variation of an axial flux machine is more critical compared to a radial flux machine. The mounting configuration of the bearings is important with regard to the tolerance stack up of both axial gaps between the magnets of each rotor and the stator. If the bearings are mounted to the housing in a similar manner compared to how bearings are typically mounted in radial machines, the tolerance chain is very long and includes dimensions of the external body or housing.

Therefore, there exists a need for a yokeless and segmented armature type axial flux machine having two rotors which when assembled achieves a desired gap between the stator and each of the rotors, while minimizing the gap variability between each rotor and the stator.

An example of a permanent magnet electric machine is known in WO 2010/092400, titled "Electric Machine - Cooling."

An example of an axial motor is US 2015/0364956, titled "Pole Shoe Cooling Gap For Axial Motor."

It is therefore an object of the present invention to facilitate the connection of a stator to a bearing assembly and the bearing assembly to a shaft, as well as the connection of two rotors to a shaft, such that a desired gap is achieved between the stator and each rotor, where the assembly also minimizes the gap variability between a stator and the rotor.

The present invention relates to axial flux machines, such as yokeless and segmented armature axial flux machines. The present invention includes an assembly structure which includes rotor arrangement of an axial flux electrical machine by defining a technology and construction structure to assemble rotors shaft and bearings.

The present invention provides a machine construction structure that reduces the tolerance chain for optimum airgap dimension control and lowers the run-out-error of the rotor-disc subassembly.

In an embodiment, the present invention provides an assembly structure of a yokeless and segmented armature type axial flux electric machine, which includes two rotors, one shaft, two bearings, locknuts, and one stator with a bearing seat, or bearing housing feature, in which the bearings are mounted.

In an embodiment, the bearings which are part of the yokeless and segmented armature type axial flux electric machine may be Deep Groove Ball Bearings (DGBB) or Angular Contact Ball Bearings (ACBB) and may be selected based on the axial force magnitude acting on the inner and outer race of each bearing assembly. The bearing assemblies are stroke control assembled on the shaft in a back-to-back configuration to form a bearing subassembly. The bearing assemblies are then positioned between an inner ring and a shaft such that the outer race of one of the bearing assemblies is adjacent to a flange portion of the inner ring (the bearing assemblies are positioned in a back-to-back configuration when ACBB are used to achieve higher stiffness). Subsequently, the stator is mounted over the shaft-bearings subassembly until the bearings engage the housing, and the bearings are secured in place by a bearing nut.

In an embodiment, the rotors are assembled simultaneously on opposite sides of the shaft to balance the magnetic attraction force between the magnets and the stator and limit stator deformation, which facilitates achievement of the final desired air gaps between the magnets and the stator.

During operation, the torque is transferred from rotor to shaft through the use of involute splines machined on the outer diameter of the shaft and the inner diameter of the rotor, which facilitates desired alignment and phasing between each rotor and the stator.

In an embodiment, the bearings and the rotors are preloaded by two locknuts. The subassembly, which includes the bearings mounted on the shaft, has specified preload to provide sufficient axial stiffness and limit displacement (and airgap variation) during operation. Control of the clearance of bearings is also mandatory for lifetime duration of the assembly.

In an embodiment, assembly structure of the present invention achieves desired radial rigidity and axial rigidity. The assembly structure of the present invention also has a relatively short shaft and compact packing, which allows the yokeless and segmented armature type axial flux electric machine to withstand exposure to very high loads (as a result of unbalanced forces) without bending. The assembly structure of the present invention facilitates desired air gap control due to reduced tolerance chain and maximum rigidity.

The assembly structure of the present invention achieves reduced overall axial length of the yokeless and segmented armature type axial flux electric machine, where the bearings are located on the shaft symmetry plane. The assembly structure of the present invention results in increased axial and moment rigidity due to the compactness of the sub-assembly, which includes the shaft, bearings, and rotor.

The assembly structure of the present invention improves the accuracy of airgap control by reduction of parts in the tolerance chain. Additionally, the involute splines on the outer diameter of the shaft and the inner diameter of the rotor function to transfer torque and facilitate centering of the rotor. Also, the use of the lock nuts to clamps the rotors instead of screws reduces steps in the assembly process.

This object may be achieved by the connection structure for a yokeless and segmented armature type axial flux electric machine according to independent claim 1, and the method according to independent claim 10. Preferred embodiments are given in the dependent claims.

In an embodiment, the present invention is a yokeless and segmented armature axial flux electric machine, having a shaft, at least one bearing assembly mounted to the shaft, a stator, and at least one rotor mounted to the shaft such that the rotor is adjacent the stator and the bearing assembly, and there is a gap between the rotor and the stator. In an embodiment, the yokeless and segmented armature type axial flux electric machine includes a connection structure connecting the stator and the rotor to the shaft. In an embodiment, the connection structure includes an inner ring being part of the stator, the inner ring connected to the bearing assembly, and a bearing nut connected to the inner ring such that the bearing assembly is adjacent a portion of the bearing nut. The rotor and the shaft rotate relative to the stator.

In an embodiment, an inner threaded surface is integrally formed as part of the inner ring, and an external threaded surface is integrally formed as part of the bearing nut. The external threaded surface is engaged with the inner threaded surface when the bearing nut is engaged with the inner ring.

In an embodiment, the connection structure includes a flange portion integrally formed as part of the inner ring, and a portion of the bearing assembly is located between the flange portion and the inner threaded surface.

In an embodiment, the connection structure includes an inner flange portion integrally formed as part of the rotor such that the inner flange portion is adjacent to and in contact with the bearing assembly.

In an embodiment, the connection structure includes at least one locknut mounted to the shaft adjacent the rotor, such that the locknut is adjacent the inner flange portion.

In an embodiment, the yokeless and segmented armature type axial flux electric machine includes a first rotor mounted to the shaft such that the first rotor is adjacent the stator and the bearing assembly, and there is a first gap between the first rotor and the stator. In an embodiment, the yokeless and segmented armature type axial flux electric machine includes a second rotor mounted to the shaft such that the second rotor is adjacent the stator and the bearing assembly and there is a second gap between the second rotor and the stator. In an embodiment, the width of the first gap is approximately the same as the width of the second gap.

In an embodiment, the connection structure includes a first inner flange portion integrally formed as part of the first rotor and a second inner flange portion integrally formed as part of the second rotor. The first inner flange portion is adjacent to and in contact with the bearing assembly, and the second inner flange portion is adjacent to and in contact with the bearing assembly on the opposite side of the bearing assembly is relation to the first inner flange portion.

In an embodiment, the connection structure includes a first locknut mounted to the shaft adjacent the first rotor, such that the first locknut is adjacent the first inner flange portion, and a second locknut mounted to the shaft adjacent the second rotor, such that the second locknut is adjacent the second inner flange portion. The first inner flange portion, the bearing assembly, and the second inner flange portion are compressed between the first locknut and the second locknut.

In an embodiment, a first plurality of magnets is part of the first rotor; and, and a second plurality of magnets is part of the second rotor. In an embodiment, the first plurality of magnets s aligned with the second plurality of magnets when the first rotor is mounted to the shaft and when the second rotor is mounted to the shaft.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

The present invention will become more fully understood from the detailed description and the accompanying drawings, wherein:
Fig. 1 is a perspective view of a yokeless and segmented armature type axial flux electric machine having a construction structure, according to embodiments of the present invention;
Fig. 2 is a perspective view of a shaft which is part of a yokeless and segmented armature type axial flux electric machine having a construction structure, according to embodiments of the present invention;

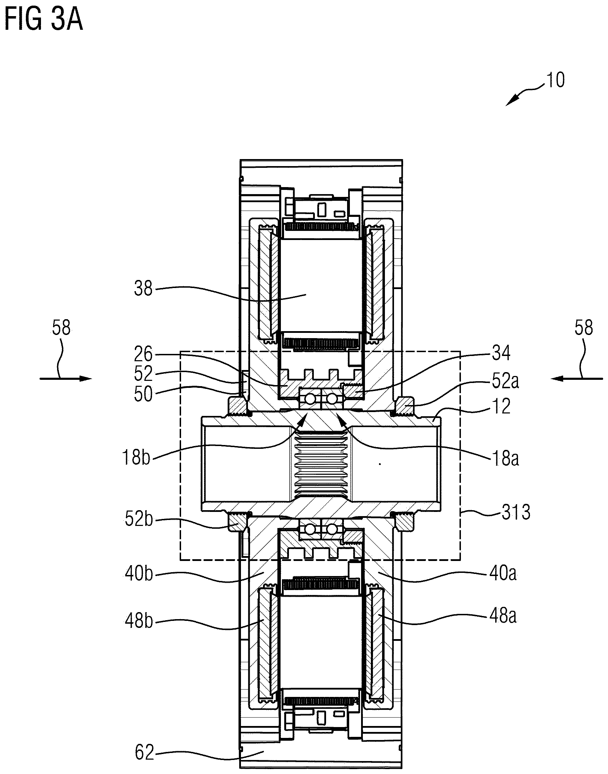

Fig. 3A is a sectional view taken along lines 3A-3A in Fig. 1;

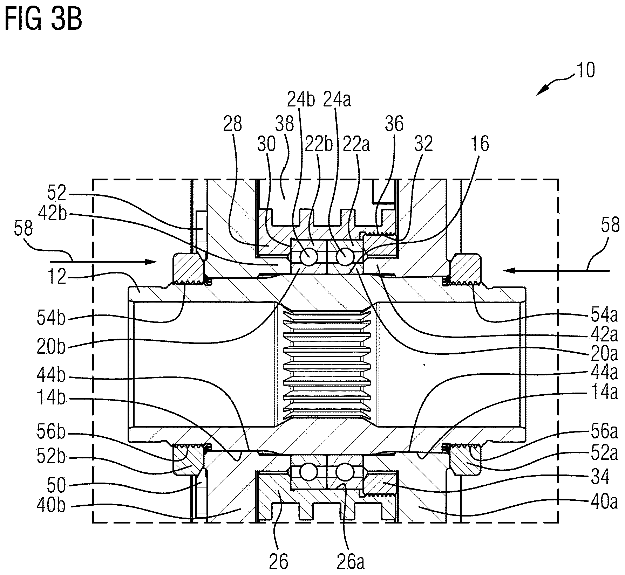

Fig. 3B is an enlarged view of the noted portion in Fig. 3A;

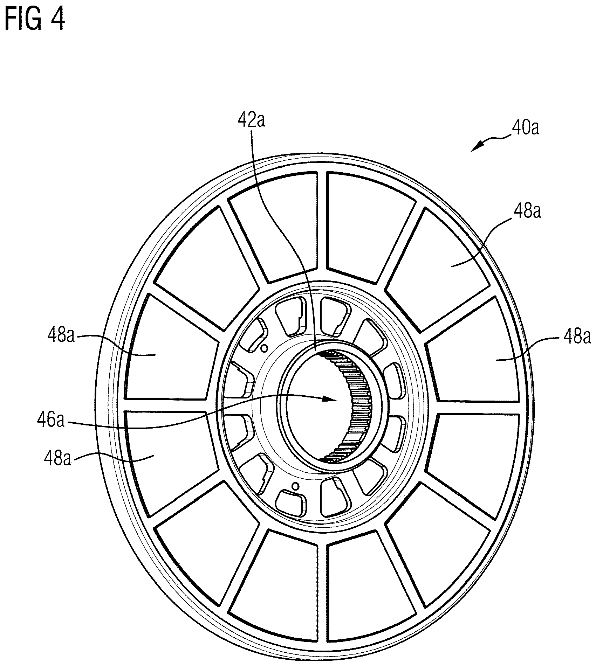

Fig. 4 is a perspective view of a rotor used as part of yokeless and segmented armature type axial flux electric machine having a construction structure, according to embodiments of the present invention;

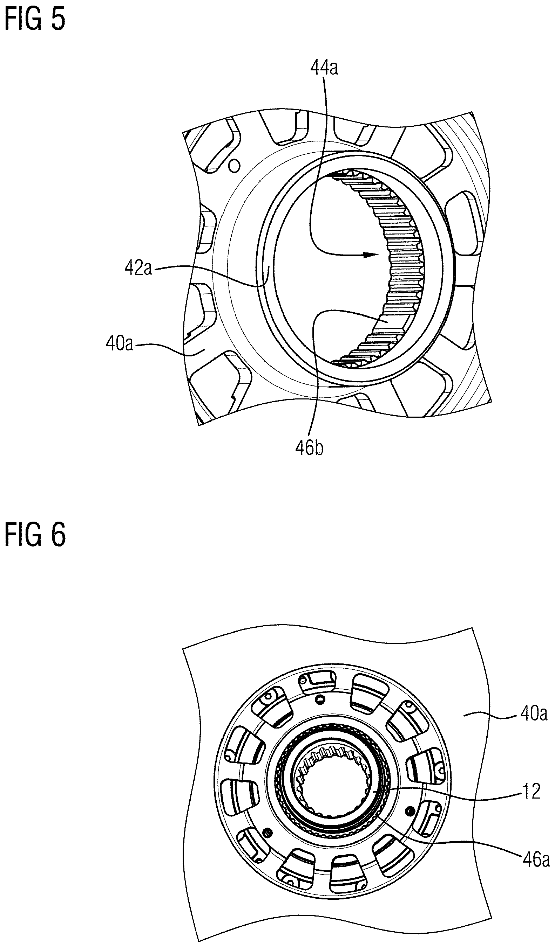

Fig. 5 is an enlarged view of a portion of Fig. 4;
Fig. 6 is an enlarged perspective view of a shaft connected to two rotors used as part of a yokeless and segmented armature type axial flux electric machine having a construction structure, according to embodiments of the present invention;

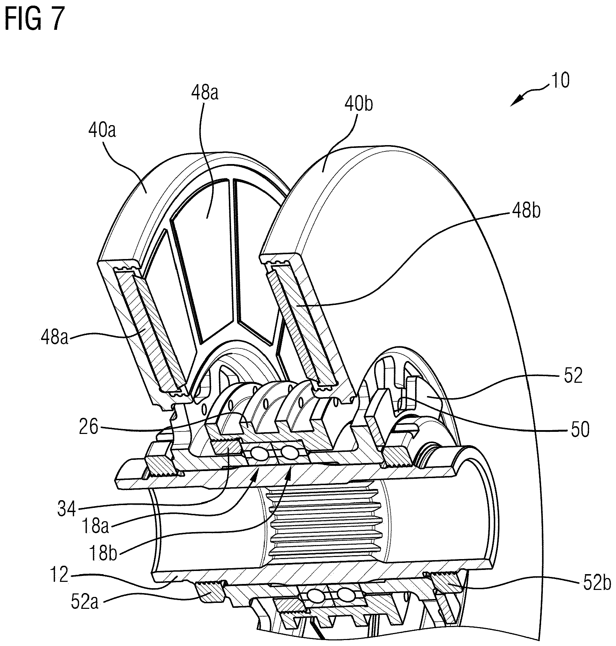

Fig. 7 is a first angled sectional view of several components of a yokeless and segmented armature type axial flux electric machine having a construction structure, according to embodiments of the present invention;

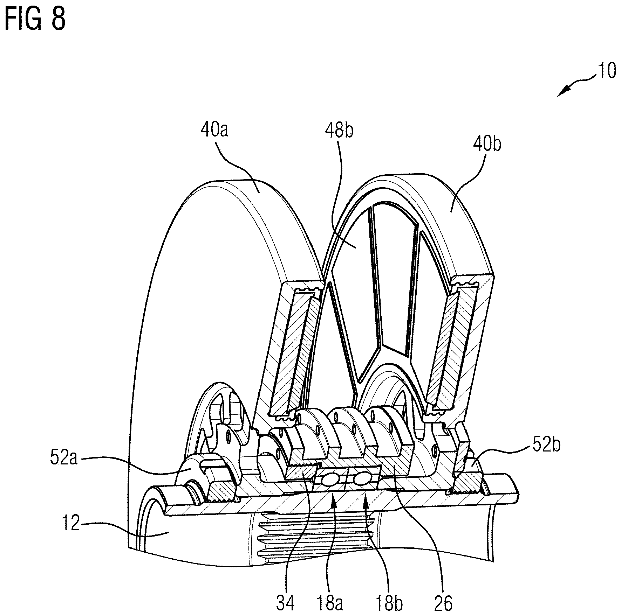

Fig. 8 is a second angled sectional view of several components of a yokeless and segmented armature type axial flux electric machine having a construction structure, according to embodiments of the present invention;

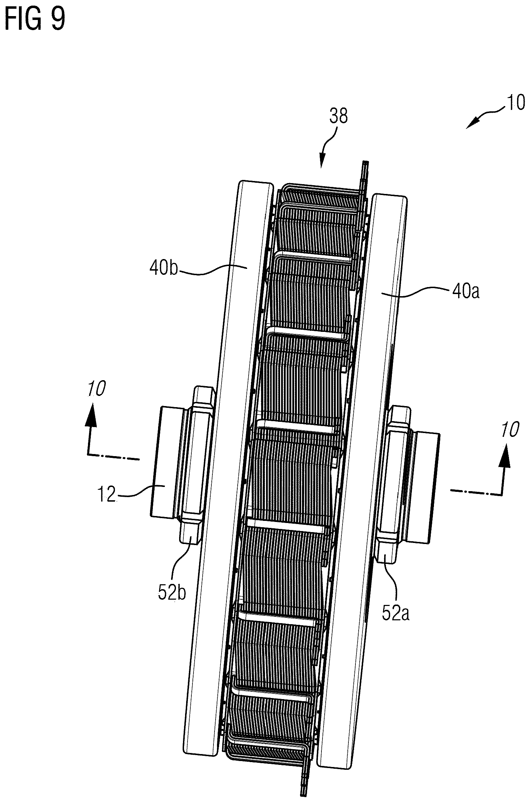

Fig. 9 is a perspective view of a yokeless and segmented armature type axial flux electric machine having a construction structure, with the outer housing removed, according to embodiments of the present invention; and

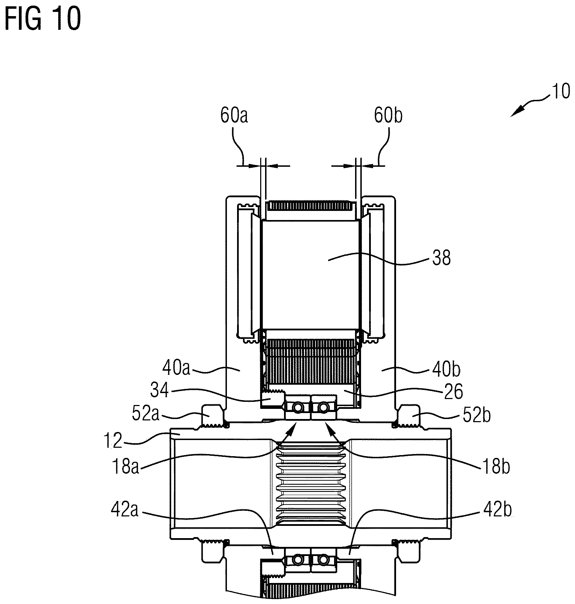

Fig. 10 is a partial sectional view taken along lines 10-10 of Fig. 9.

The following description of the preferred embodiment(s) is merely exemplary in nature and is in no way intended to limit the invention, its application, or uses.

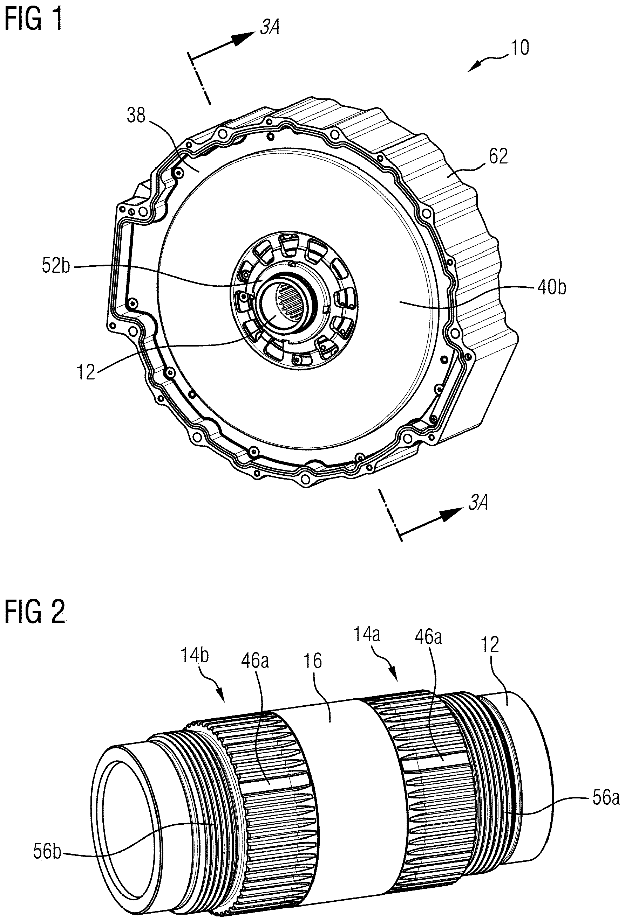

An embodiment of a yokeless and segmented armature axial flux electric machine having a connection structure according to the present invention is shown in Fig. 1, generally at 10. Referring to the Figs. generally, the machine 10 includes a shaft 12 having a first plurality of external splines, shown generally at 14a, and second plurality of external splines, shown generally at 14b, with a mounting surface 16 between each of the pluralities of external splines 14a, 14b.

Mounted to the mounting surface 16 is a first bearing assembly 18a and a second bearing assembly 18b, which are adjacent to one another. The bearing assemblies 18a, 18b mounted to the shaft 12 form a bearing subassembly. In an embodiment, the bearing assemblies 18a, 18b are press-fit mounted to the shaft 12, but it is within the scope of the invention that other mounting methods may be used. The bearing assemblies 18a, 18b may be selected from any suitable type of bearing assembly, such as, but not limited to, Deep Groove Ball Bearings (DGBB) or Angular Contact Ball Bearings (ACBB). More specifically, in the embodiment shown each bearing assembly 18a, 18b has an inner race 20a,20b, an outer race 22a,22b, and a ball bearing 24a,24b. The inner race 20a,20b of each bearing assembly 18a, 18b is mounted to the mounting surface 16. Mounted to the outer race 22a,22b of the bearing assemblies 18a, 18b is an inner ring 26. The inner ring 26 has a flange portion 28 which is adjacent a side surface 30 of the outer race 22b of the second bearing assembly 18b.

The inner ring 26 also includes an inner threaded surface 32 which is integrally formed as part of the inner ring 26 on the opposite side of the inner ring 26 in reference to the flange portion 28. The machine 10 also includes a bearing nut 34, which has an external threaded surface 36, and the external threaded surface 36 is engaged with the inner threaded surface 32 when the bearing nut 34 is attached to the inner ring 26.

The inner ring 26 is part of a stator 38, and the stator 38 is mounted to the bearing assemblies 18a, 18b such that an inner surface 26a of the inner ring 26 (where the inner surface 26a is located between the flange portion 28 and the inner threaded surface 32) is mounted to the outer race 22a,22b of each bearing assembly 18a, 18b, and the flange portion 28 is adjacent the side surface 30 of the outer race 22b of the second bearing assembly 18b as described above. As the bearing nut 34 is attached to the inner ring 26 and tightened, there is a clamping force applied to the outer races 22a,22b by the flange portion 28 and the bearing nut 34, which maintains the position of the stator 38 relative to the bearing assemblies 18a, 18b.

The inner ring 26 is part of a stator 38, and the stator 38 is located between two rotors 40a,40b. Both rotors 40a,40b have an inner flange portion 42a,42b, and integrally formed as part of each of the inner flange portions 42a,42b is a plurality of inner splines 44a,44b, respectively. Also included is are keyway features to ensure that each of the rotors 40a,40b are properly oriented relative to one another, and to the shaft 12, once assembled. The keyway feature which provides proper positioning of the first rotor 40a on the shaft 12 is described, but it is within the scope of the invention that the keyway feature to provide proper positioning of the second rotor 40b on the shaft 12 is similar.

The keyway feature includes a wide spline, or engagement spline 46a integrally formed as part of the shaft 12 such that the engagement spline 46a is disposed between two of the first plurality of external splines 14a. In the embodiment shown, the engagement spline 46a is the width of two of the plurality of external splines 14a, but it is within the scope of the invention that other widths may be used. The keyway feature also includes an engagement surface 46b which is located between two of the plurality of inner splines 44a. The first rotor 40a is mounted to the shaft 12 such that the flange portion 42a is in contact with the inner race 20a of the first bearing assembly 18a. In order for the first rotor 40a to be properly mounted on the shaft 12, the rotor 40a must be positioned such that the engagement spline 46a is in contact with the engagement surface 46b and located in between the two inner splines 44a on each side of the engagement surface 46b, and the inner splines 44a engage with the first plurality of inner splines 14a. Because there is only one engagement spline 46a and only one engagement surface 46b, there is only a single orientation that may be used to mount the rotor 40a to the shaft 12. The second rotor 40b is mounted to the shaft 12 in a similar manner.

The first rotor 40a, includes a plurality of magnets, shown generally at 48a, and the second rotor 40b also includes a plurality of magnets, shown generally at 48b. The keyway features being used to ensure proper orientation of the rotors 40a,40b on the shaft 12 and relative to one another also achieves proper orientation of the pluralities of magnets 48a,48b relative to one another.

Adjacent the second rotor 40b and mounted to the shaft 12 is an outer plate 50, which includes a protrusion 52, where the other plate 50 is part of a sensor tone wheel.

The machine 10 also includes two locknuts 52a,52b, each having an inner threaded surface 54a,54b, respectively. The first locknut 52a is attached to the shaft 12 such that the inner threaded surface 54a of the locknut 52a is engaged with a corresponding outer threaded surface 56a of the shaft 12. The second locknut 52b is attached to the shaft 12 such that the inner threaded surface 54b of the locknut 52b is engaged with a corresponding outer threaded surface 56b of the shaft 12. The locknuts 52a,52b are rotated to apply compressive force to the inner flange portions 42a,42b in the direction shown by arrows 58, and the inner flange portions 42a,42b are in contact with the inner race 20a,20b of each bearing assembly 18a, 18b such that the inner flange portions 42a,42b and the inner race 20a,20b of each bearing assembly 18a, 18b is compressed between the locknuts 52a,52b, respectively.

During assembly, the bearing assemblies 18a, 18b are first mounted to the shaft 12, as described above. Next, the stator 38 is mounted to the bearing assemblies 18a, 18b using the inner ring 26 and bearing nut 34 as previously described. The rotors 40a,40b and the outer plate 50 are then assembled to the shaft 12, and secured in place using the locknuts 52a,52b as described above. Once assembled, the desired stack-up of the first rotor 40a, the stator 38, and the second rotor 40b results in a clearance, or gap 60a between the first plurality of magnets 48a and the stator 38, and another gap 60b between the stator 38 and the second plurality of magnets 48b. The assembly of the stator 38 using the inner ring 26 and the bearing nut 34 along with the keyway features provides the desired width for each gap 60a,60b.

The final steps for assembly includes inserting the assembled shaft 12, bearing assemblies 18a, 18b, stator 38, bearing nut 34, rotors 40a,40b, and locknuts 52a,52b into an outer housing 62. More specifically, the stator 38 is mounted to the inside of the outer housing 62.

The present invention is a yokeless and segmented armature axial flux electric machine 10 having a shaft 12, and at least one bearing assembly, or in the embodiment shown two bearing assemblies 18a, 18b, mounted to the shaft 12. A stator 38 is mounted to the bearing assemblies 18a, 18b using an inner ring 26 of the stator 38 and a bearing nut 34. A first rotor 40a and a second rotor 40b are then mounted to the shaft 12 such that a plurality of magnets 48a of the first rotor 40a is properly oriented relative to a plurality of magnets 48b of the second rotor 40b. The first rotor 40a and the second rotor 40b are mounted to the shaft 12 using a keyway feature, where each keyway feature includes a engagement spline 46a integrally formed as part of the shaft 12 which is engaged with an engagement surface 46b formed as part of the respective rotor 40a,40b.

The description of the invention is merely exemplary in nature and, thus, variations that do not depart from the gist of the invention are intended to be within the scope of the invention. Such variations are not to be regarded as a departure from the spirit and scope of the invention.

## Claims

1. A yokeless and segmented armature axial flux electric machine (10), comprising:
- a shaft (12);
- at least one bearing assembly (18a, 18b) mounted to the shaft (12);
- a stator (38);
- at least one rotor (40a,40b) mounted to the shaft (12) such that the at least one rotor (40a,40b) is adjacent the stator (38) and the at least one bearing assembly (18a, 18b), and there is a gap (60a,60b) between the at least one rotor (40a,40b) and the stator (38);
- connection structure connecting the stator (38) and the at least one rotor (40a,40b) to the shaft (12), the connection structure further comprising:
- an inner ring (26) being part of the stator (38), the inner ring (26) connected to the at least one bearing assembly (18a, 18b); and
- a bearing nut (34) connected to the inner ring (26) such that the at least one bearing assembly (18a,18b) is adjacent a portion of the bearing nut (34);
- wherein the at least one rotor (40a,40b) and the shaft (12) rotate relative to the stator (38).

2. The yokeless and segmented armature type axial flux electric machine (10) of claim 1, the connection structure further comprising:
- an inner threaded surface (32) integrally formed as part of the inner ring (26);
- an external threaded surface (36) integrally formed as part of the bearing nut (34);
- wherein the external threaded surface (36) is engaged with the inner threaded surface (32) when the bearing nut (34) is engaged with the inner ring (26).

3. The yokeless and segmented armature type axial flux electric machine (10) of one of the preceding claims, the connection structure further comprising:
- a flange portion (28) integrally formed as part of the inner ring (26);
- wherein a portion of the at least one bearing assembly (18a,18b) is located between the flange portion (28) and the inner threaded surface (32).

4. The yokeless and segmented armature type axial flux electric machine (10) of one of the preceding claims, the connection structure further comprising:
- an inner flange portion (42a,42b) integrally formed as part of the at least one rotor (40a,40b);
- wherein the inner flange portion (42a,42b) is adjacent to and in contact with the at least one bearing assembly (18a, 18b).

5. The yokeless and segmented armature type axial flux electric machine (10) of one of the preceding claims, the connection structure further comprising at least one locknut (52a,52b) mounted to the shaft (12) adjacent the at least one rotor (40a,40b), such that the at least one locknut (52a,52b) is adjacent the inner flange portion (42a,42b).

6. The yokeless and segmented armature type axial flux electric machine (10) of one of the preceding claims, the at least one rotor (40a,40b) further comprising:
- a first rotor (40a) mounted to the shaft (12) such that the first rotor (40a) is adjacent the stator (38) and the at least one bearing assembly (18a, 18b), and there is a first gap (60a) between the first rotor (40a) and the stator (38); and
- a second rotor (40b) mounted to the shaft (12) such that the second rotor (40b) is adjacent the stator (38) and the at least one bearing assembly (18a, 18b) and there is a second gap (60b) between the second rotor (40b) and the stator (38);
- wherein the width of the first gap (60a) is approximately the same as the width of the second gap (60b).

7. The yokeless and segmented armature type axial flux electric machine (10) of one of the preceding claims, the connection structure further comprising:
- a first inner flange portion (42a) integrally formed as part of the first rotor (40a); and
- a second inner flange portion (42b) integrally formed as part of the second rotor (40b);
- wherein the first inner flange portion (42a) is adjacent to and in contact with the at least one bearing assembly (18a, 18b), and the second inner flange portion (42b) is adjacent to and in contact with the at least one bearing assembly (18a, 18b) on the opposite side of the at least one bearing assembly (18a, 18b) is relation to the first inner flange portion (42a).

8. The yokeless and segmented armature type axial flux electric machine (10) of one of the preceding claims, the connection structure further comprising:
- a first locknut (52a) mounted to the shaft (12) adjacent the first rotor (40a), such that the first locknut (52a) is adjacent the first inner flange portion (42a); and
- a second locknut (52b) mounted to the shaft (12) adjacent the second rotor (40b), such that the second locknut (52b) is adjacent the second inner flange portion (42b);
- wherein the first inner flange portion (42a), the at least one bearing assembly (18a, 18b), and the second inner flange portion (42b) are compressed between the first locknut (52a) and the second locknut (52b).

9. The yokeless and segmented armature type axial flux electric machine (10) of one of the preceding claims, further comprising:
- a first plurality of magnets (48a) being part of the first rotor (40a); and
- a second plurality of magnets (48b) being part of the second rotor (40b);
- wherein the first plurality of magnets (48a) is aligned with the second plurality of magnets (48b) when the first rotor (40a) is mounted to the shaft (12) and when the second rotor (40b) is mounted to the shaft (12).

10. A method for assembling a yokeless and segmented armature type axial flux electric machine (10), comprising the steps of:
- providing a shaft (12);
- providing a first rotor (40a)
- providing a second rotor (40b);
- providing a stator (38);
- providing at least one bearing assembly (18a, 18b);
- providing an inner ring (26) being part of the stator (38); and
- providing a bearing nut (34);
- mounting the at least one bearing assembly (18a, 18b) to the shaft (12);
- mounting the stator (38) such that the inner ring (26) is mounted to the at least one bearing assembly (18a, 18b);
- connecting the bearing nut (34) to the inner ring (26) such that the at least one bearing assembly (18a,18b) is adjacent a portion of the bearing nut (34);
- mounting the first rotor (40a) to the shaft (12) such that the first rotor (40a) is adjacent the stator (38) and there is a first gap (60a) between the first rotor (40a) and the stator (38);
- mounting the second rotor (40b) to the shaft (12) such that the second rotor (40b) is adjacent the stator (38) and there is a second gap (60a) between the second rotor (40b) and the stator (38).

11. The method of claim 10, further comprising the steps of:
- providing an inner threaded surface (32) integrally formed as part of the inner ring (26);
- providing an external threaded surface (36) integrally formed as part of the bearing nut (34);
- engaging the external threaded surface (36) with the inner threaded surface (32) when the bearing nut (34) is engaged with the inner ring (26).

12. The method of one of the preceding claims, further comprising the steps of:
- providing a first inner flange portion (42a) integrally formed as part of the first rotor (40a); and
- providing a second inner flange portion (42b) integrally formed as part of the second rotor (40b);
- mounting the first rotor (40a) and the second rotor (40b) to the shaft (12) such that the first inner flange portion (42a) is adjacent to and in contact with the at least one bearing assembly (18a, 18b), and the second inner flange portion (42b) is adjacent to and in contact with the at least one bearing assembly (18a, 18b) on the opposite side of the at least one bearing assembly (18a, 18b) is relation to the first inner flange portion (42a).

13. The method of one of the preceding claims, further comprising the steps of:
- providing a first locknut (52a); and
- providing a second locknut (52b);
- mounting the first lock nut (52a) to the shaft (12) adjacent the first rotor (40a), such that the first locknut (52a) is adjacent the first inner flange portion (42a);
- mounting the second locknut (52b) to the shaft (12) adjacent the second rotor (40b), such that the second locknut (52b) is adjacent the second inner flange portion (42b), and the first inner flange portion (42a), the at least one bearing assembly (18a, 18b), and the second inner flange portion (42b) are compressed between the first locknut (52a) and the second locknut (52b).
